# FASCICULE DE BREVET EUROPEEN

(11) **EP 3 619 797 B1**
(45) Date de publication et mention de la délivrance du brevet: **06.04.2022**
(21) Numéro de dépôt: 18726515.2
(22) Date de dépôt: 03.05.2018
(51) Int. Cl.: H02K 9/22, H02K 3/22, H02K 3/24

(54) **MACHINE ÉLECTRIQUE À MATÉRIAU À CHANGEMENT DE PHASE D'UN DÉMARREUR-GÉNÉRATEUR D'UNE TURBOMACHINE**
ELEKTRISCHE MASCHINE MIT SPEICHERSTOFF FÜR EINEN TURBOMASCHINENSTARTER/-GENERATOR
ELECTRIC MACHINE WITH PHASE CHANGE MATERIAL FOR A TURBOMACHINE STARTER/GENERATOR

(30) Priorité: 03.05.2017 FR 1753877
(43) Date de publication de la demande: 11.03.2020
(73) Titulaire: Safran Helicopter Engines, 64510 Bordes (FR)
(72) Inventeur: KLONOWSKI, Thomas, 77550 Moissy-Cramayel (FR); SERGHINE, Camel, 77550 Moissy-Cramayel (FR)
(74) Mandataire: Regimbeau
(86) Numéro de dépôt international: PCT/FR2018/000108
(87) Numéro de publication internationale: WO 2018/202963

(56) Documents cités:
- EP-A1- 2 985 885
- CN-B- 103 618 394
- DE-A1- 2 130 016
- FR-A1- 2 971 376
- FR-A1- 3 012 698
- JP-A- H08 205 442
- US-A- 3 801 843
- US-A- 3 801 843

## Description

### DOMAINE TECHNIQUE GENERAL

L'invention concerne les moteurs d'aéronef en particulier ceux d'un hélicoptère. Elle concerne particulièrement les machines électriques installées sur les moteurs d'hélicoptères réalisant la fonction de génération d'énergie électrique, et /ou de motorisation électrique de certains organes mécaniques. Ces machines électriques peuvent être des générateurs-démarreurs, des démarreurs, des alternateurs ou des pompes électriques qui sont soit des machines à courant continu ou à courant alternatif.

### ETAT DE LA TECHNIQUE

Un moteur d'un aéronef comprend des machines électriques comprenant un rotor (partie tournante) et un stator (partie fixe), le stator comprend un circuit magnétique et un circuit électrique constitué par un ensemble de bobinages composés de fils conducteurs.

De manière connue, de telles machines électriques présentent des phases transitoires de fonctionnement rencontrées principalement lors des séquences de démarrage ou d'accélération du moteur de l'aéronef ou de certains équipements que comprend le moteur de l'aéronef.

Au cours de ces phases transitoires, la machine électrique ainsi fortement sollicitée, dissipe une quantité de chaleur qui peut s'avérer dommageable pour elle-même, chaleur principalement dissipée dans les circuits électriques et/ou sur les aimants permanents si la machine en comprend.

De manière connue, pour favoriser la dissipation de la chaleur et ainsi garantir l'intégrité de la machine électrique, on surdimensionne les éléments qui la composent ce qui pénalise sa masse et son encombrement.

En effet, la structure et le dimensionnement d'une machine électrique sont guidés par sa tenue en thermique et cela est principalement fonction de l'amplitude des courants électriques qu'elle supporte au sein de ces bobinages conducteurs (par exemple, une machine électrique fonctionnant sous une tension réseau de 28Vdc, sous une puissance de plusieurs kW ou kVA donnera des courants électriques d'intensité élevées pouvant atteindre plusieurs centaines d'ampères).

Afin d'optimiser la dissipation thermique de la machine électrique, plusieurs solutions sont d'ores et déjà connues et exploitées.

Une première solution utilise la convection naturelle avec refroidissement par dissipateur à ailettes en périphérie de la machine électrique pour avoir une surface d'échange importante avec le milieu environnant. Toutefois, cette solution est encombrante et massive et nécessite souvent un flux d'air en périphérie de la machine.

Une seconde solution utilise la convection forcée par l'ajout d'un ventilateur connecté à l'arbre rotor de la machine électrique, dont le flux d'air ainsi produit échangera avec les parties externes et/ou internes de celle-ci. Toutefois, cette solution est encombrante et peut générer des sources de pannes supplémentaires.

Une troisième autre solution utilise un refroidissement forcé en injectant un liquide circulant dans des canaux dédiés à l'intérieur de la machine électrique ou en périphérie (eau, huile, carburant, etc.) et nécessite le plus souvent la présence d'un échangeur supplémentaire pour assurer le refroidissement de ce liquide. Toutefois, cette solution est aussi encombrante, massive et intrusive, et nécessite des pas de maintenance assez courts (i.e. gestion des étanchéités).

Une quatrième solution utilise un refroidissement par module thermoélectrique (effet Peltier). Toutefois, avec cette solution le refroidissement est réalisé uniquement sur des zones localisées et nécessite également une alimentation stabilisée permettant l'alimentation thermoélectrique.

Des machines électriques avec des conducteurs creux et remplis de matériau à changement de phase sont connues de CN 103 618 394 B, DE 21 30 016 A1 et JP H08 205442 A. Ainsi, dans une application aéronautique, c'est-à-dire dans le cadre d'un système embarqué exigeant de fortes contraintes en termes de compacité, masse et fiabilité, les solutions existantes ne sont pas satisfaisantes.

### PRESENTATION DE L'INVENTION

L'invention permet de réduire la masse et la taille d'une machine électrique d'un moteur d'un aéronef et permet d'en améliorer ces performances électromagnétiques.

A cet effet, l'invention propose une machine électrique selon la revendication 1.

L'invention est avantageusement complétée par les caractéristiques suivantes, prises seules ou en une quelconque de leur combinaison techniquement possible.

Le bobinage est un ensemble de fil cylindrique creux.

Le bobinage est un bobinage barre creux.

Le bobinage est monobloc et de préférence obtenu selon un procédé de fabrication additive.

Le matériau à changement de phase est sous forme de sels ou sous forme de composés organiques ou eutectiques ayant des températures de changement de phase solide-liquide, adaptés en fonction des contraintes d'utilisation de la machine électrique, supérieures à une centaine de degré Celsius, typiquement entre 100 °C et 300°C.

Le dissipateur de chaleur comprend, outre le matériau à changement de phase, au moins un élément qui est conducteur électrique de manière à ne pas perturber la circulation des lignes de champ magnétiques dans ladite machine.

Le matériau à changement de phase est capable de changer d'état physique entre l'état solide et l'état liquide dans une plage de température donnée.

Le matériau à changement de phase est contenu dans une enveloppe métallique étanche, l'enveloppe étant conducteur électrique ou non, et conducteur thermique.

L'enveloppe métallique étanche est thermiquement conductrice et électriquement conductrice.

L'invention concerne en outre une machine à courant continu ou à courant alternatif tel qu'un générateur-démarreur, un alternateur, une pompe comprenant une machine électrique selon l'invention.

Et l'invention concerne également un moteur d'un aéronef, tel qu'un hélicoptère, comprenant un démarreur-générateur selon l'invention.

L'utilisation de matériaux à changement de phase permet un refroidissement au plus près des éléments chauffants. En effet en atteignant sa température de fusion donc en passant de l'état solide à l'état liquide, le matériau à changement de phase absorbe une quantité de chaleur. En conséquence, un transfert thermique va s'opérer entre les éléments chauffants et le matériau à changement de phase.

L'invention permet de réduire la masse globale d'un moteur d'un aéronef en diminuant la masse de la machine électrique. En particulier, sont diminuées les masses des constituants ferromagnétiques (utilisé dans le circuit magnétique de la machine) et du Cuivre (utilisé pour le bobinage du circuit électrique) à l'intérieur de la machine.

En effet, en optimisant les transferts thermiques au plus près des éléments soumis aux plus fortes élévations de température on peut réduire la masse et l'encombrement des machines électriques.

En outre, il n'y pas d'ajout de systèmes supplémentaires (i.e. échangeur, ailettes, ...) pénalisant le bilan masse, l'encombrement et la fiabilité de la machine électrique.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre une vue en coupe schématique d'une machine électrique selon un mode de réalisation de l'invention ;
- les figures 2a et 2b illustrent des vues d'éléments conducteurs d'une
   machine électrique qui ne sont pas selon l'invention ;
- la figure 3a, 3b, 3c illustrent des vues en coupe de fils constituant le bobinage d'une machine électrique selon l'invention ;
- les figures 4 et 5 illustrent une vue d'un bobinage barre creux, selon deux variantes, d'une machine électrique selon l'invention ;
- la figure 6 illustre des courbes d'élévation de la température au sein de l'encoche du stator contenant le bobinage et le matériau à changement de phase, en fonction de la durée de la sollicitation thermique (i.e., transitoires de la machine électrique lié au démarrage du moteur de l'aéronef).

Sur l'ensemble des figures les éléments similaires portent des références identiques.

### DESCRIPTION DETAILLEE DE L'INVENTION

Dans ce qui suit, on entend par « matériau à changement de phase » un matériau capable de changer d'état physique dans une plage de température donnée et qui va absorber une grande quantité d'énergie calorifique venant de son environnement proche pour passer de l'état solide à liquide et qui restitue une partie de l'énergie calorifique quand le matériau se refroidit en passant de l'état liquide à l'état solide. Ces matériaux à changement de phase sont des sels qui peuvent être composés de nitrate ou d'hydroxyde. Le changement de phase solide à liquide du matériau se fait à une température dépassant la centaine de degré Celsius jusqu'à une température de l'ordre de 300 °C.

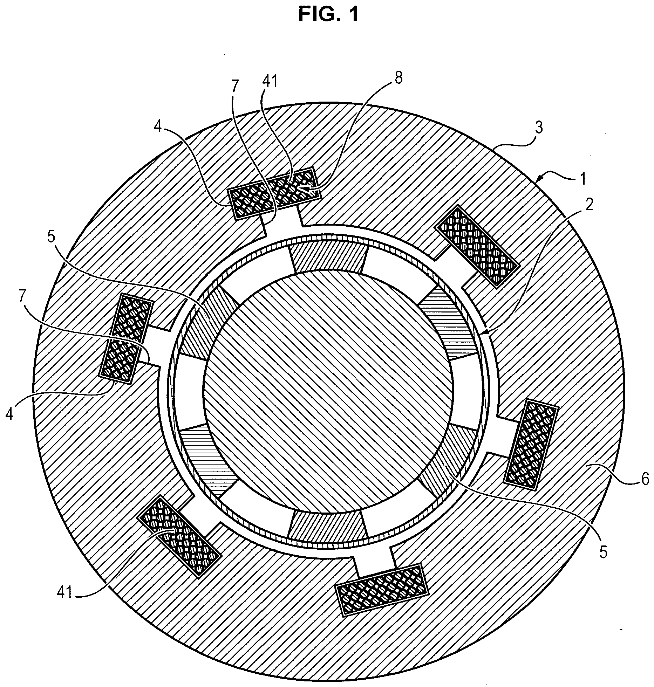

On a illustré sur la **figure 1****,** une machine électrique selon un mode de réalisation de l'invention. Une telle machine électrique est notamment utilisée dans un moteur d'aéronef.

La machine électrique de la figure 1 est une machine à aimants permanents et comprend un stator 1 et un rotor 2.

Le stator 1 comprend un circuit magnétique 3. Le circuit magnétique 3 comprend une portion périphérique 6 de forme générale cylindrique et des pôles 7 s'étendant vers le rotor 2 et le stator 1 comprend un circuit électrique 4 constitué d'un bobinage de N éléments 41 conducteur autour de chaque pôle 7 du circuit magnétique 3. Sur cette figure, les éléments 41 conducteurs sont de section cylindrique mais d'autres sections peuvent être envisagées.

Le rotor 2 supporte des aimants permanents 5. Sur la figure 1, la machine électrique comprend six aimants permanents 5 mais un nombre différent peut être envisagé.

Ce type de topologie de machine électrique permet de fonctionner soit en mode générateur (i.e., le rotor 2 tourne grâce à l'application d'un couple mécanique externe et la variation de flux magnétique dans le circuit électrique 4 induit un courant électrique) ou en mode moteur (i.e. l'alimentation du circuit électrique 4 engendre un flux magnétique à travers le circuit magnétique 3 et l'interaction avec le flux magnétique issu des aimants 5 engendre une rotation du rotor 2 donc un couple mécanique vers l'extérieur).

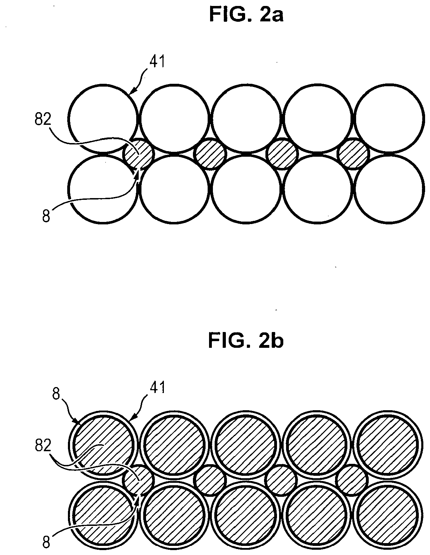

Afin de favoriser la dissipation de la chaleur de la machine électrique au cours notamment des phases transitoires présentées précédemment, on prévoit des éléments conducteurs creux pour le bobinage et - selon l'invention-au moins un dissipateur 8 de chaleur logé à l'intérieur d'au moins un élément conducteur et/ou - non conforme à l'invention - disposé entre les éléments conducteurs (voir les **figures 2a** et **2b** illustrant des dissipateurs de chaleur entre les éléments 41 conducteurs avec ou sans dissipateur 8 de chaleur à l'intérieur des éléments conducteurs).

Notamment, dans l'exemple de la figure 2a, qui n'est pas selon l'invention, des dissipateurs 8 de chaleur de forme cylindrique s'étendent dans les espaces ménagés entre des éléments 41 conducteurs, qui présentent eux-mêmes une forme de fils cylindriques. Les dissipateurs 8 de chaleur s'étendent le long des éléments 41 conducteurs, selon une direction d'extension sensiblement parallèle à celles des éléments conducteurs.

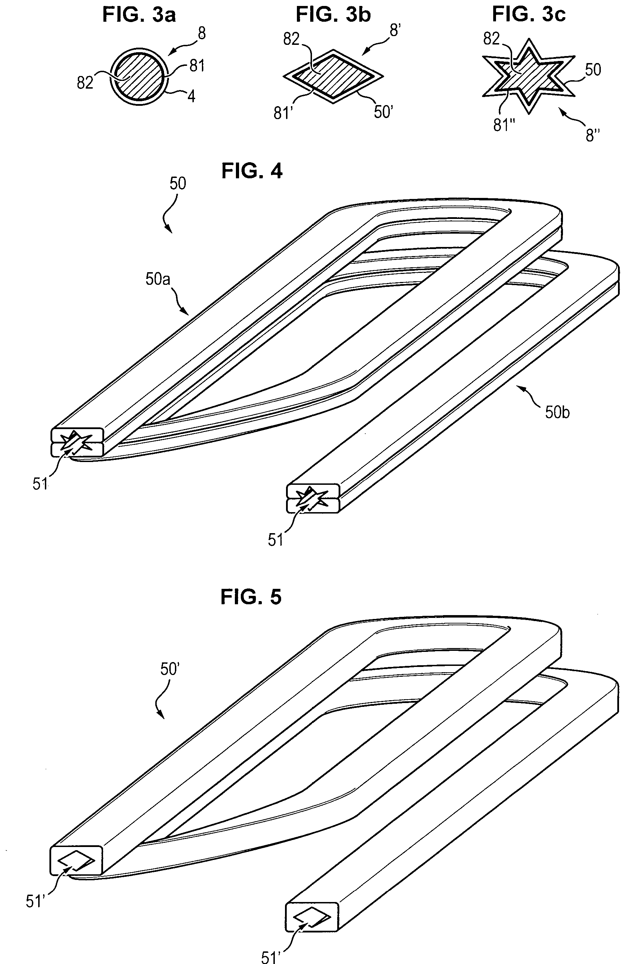

Comme illustré sur les **figures 3a, 3b, 3c****,** un dissipateur 8, 8', 8" de chaleur est constitué d'une enveloppe 81, 81', 81" contenant un matériau 82 à changement de phase. L'enveloppe 81, 81', 81" est étanche pour maintenir et confiner le matériau à l'état liquide.

De manière non limitative, sur la figure 3a, le dissipateur de chaleur est cylindrique pour s'adapter à des fils conducteurs du bobinage également cylindrique. Bien entendu, d'autres formes sont envisageables et dépendent de la forme de l'élément conducteur : en losange sur la figure 3b, en étoile sur la figure 3c.

Selon l'application, et plus particulièrement dans le cadre des moteurs électriques fortes puissances pour les applications plus électriques pour aéronef, le bobinage statorique (i.e., du stator : circuit électrique) peut être avantageusement de topologie appelé « bobinage barre » ; c'est-à-dire que les bobines de fils cylindriques sont remplacées par du bobinage massif, homogène et rigide afin d'avoir un meilleur taux de remplissage des encoches (i.e., égale au rapport surface effective de cuivre / surface totale d'encoche) et donc d'avoir la possibilité soit d'augmenter puissance électrique de la machine électrique pour une même masse, soit de minimiser la masse de cuivre pour un besoin de puissance constant.

Le problème de la dissipation de chaleur est dans ce cas bien plus important qu'avec un bobinage constitué de N fils cylindriques, car lorsque ces bobinages barres sont alimentés par des courants alternatifs de fréquences relativement élevées au-delà du kHz, les pertes Joules sont augmentés par « l'effet de peau » (i.e., réduction de la résistance apparente du conducteur car les courants électriques se concentrent de plus en plus en périphérie lors d'une augmentation de la fréquence d'alimentation).

La **figure 4** illustre un bobinage 50 barre constitué de deux conducteurs massifs 50a, 50b plaqués ensemble. La forme des deux conducteurs 50a, 50b est telle que les deux conducteurs 50a, 50b définissent un logement 51 permettant de loger à l'intérieur un dissipateur de chaleur (non représenté). Sur cette figure, le logement 51 a une forme en « étoile » mais peut avoir une autre forme.

De manière avantageuse, comme illustré sur la **figure 5****,** le bobinage barre est monobloc et est constitué d'une ou plusieurs barres(s). De plus, sur cette figure, le bobinage barre comprend un logement ayant une forme de « losange ».

De manière avantageuse, le bobinage barre est monobloc ou composé d'un ensemble de barres unitaires et est obtenu au moyen d'un procédé de fabrication additive (i.e. type SLM, en anglais, « *Selective Laser Melting* » ou autres ...) qui permet de réaliser des formes complexes à l'intérieur du bobinage, favorisant l'optimisation des transferts thermiques (i.e., surface d'échange augmentée entre le matériaux à changement de phase et le conducteur), le logement 51 contient donc un dissipateur de chaleur et permet donc limiter la montée en température et donc assurer un niveau de fiabilité élevée (i.e., tenue de l'isolant du bobinage en particulier).

Dans le cas où on prévoit un dissipateur de chaleur à l'intérieur des éléments conducteurs, l'enveloppe et le matériau à changement de phase devant perturber le moins possible la circulation des lignes de champ dans le circuit magnétique, l'enveloppe est elle-même métallique et est un bon conducteur électrique.

Toujours dans ce cas, un matériau à changement de phase étant par définition un isolant électrique, le dissipateur de chaleur peut comprendre, outre le matériau à changement de phase, des éléments conducteurs tels que des nanotubes de carbone pour permettre également la libre circulation des lignes de champs dans le circuit magnétique de la machine.

En revanche, dans le cas où on prévoit un dissipateur de chaleur entre les éléments conducteurs, l'enveloppe est isolante pour ne pas contribuer à la transmission des courants électriques

Le matériau à changement de phase est sous forme de sels ou sous forme de composés organiques ou eutectiques ayant des températures de changement de phase solide-liquide supérieures à une centaine de degré Celsius, typiquement entre 100°C et 300°C de préférence. Il peut s'agir par exemple de nitrates ou des hydroxydes (LiNO₃, NaNO₃, Li₂CO₃ ...) préférablement avec du graphite.

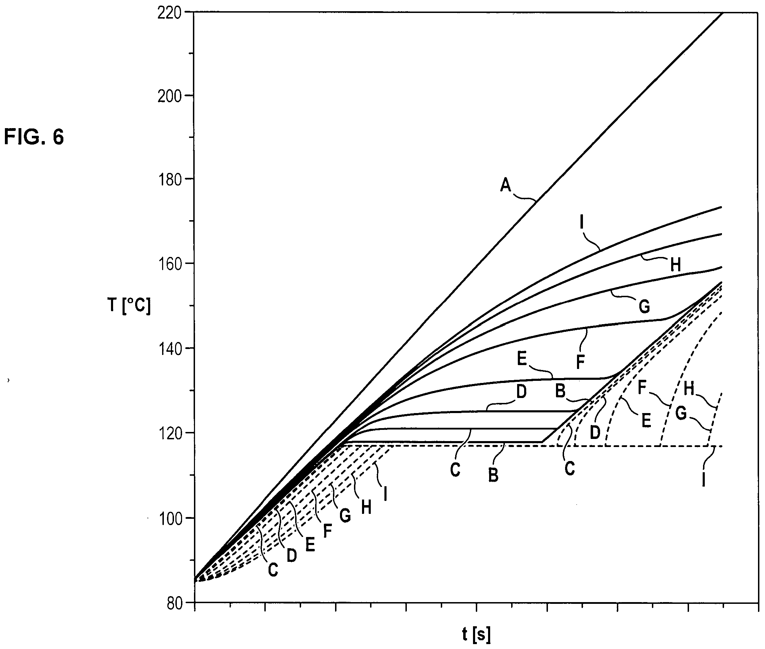

La **figure 6** illustre l'élévation de la température en fonction de la durée :
- la courbe A correspond à l'élévation de la température du bobinage sans dissipateur de chaleur ;
- les courbes en traits pointillés correspondent à l'élévation de la température du dissipateur de chaleur ;
- les courbes en traits pleins correspondent à l'élévation de la température du bobinage avec dissipateur de chaleur.

Le réseau de courbe correspond à plusieurs résistances thermiques nommé « Rth » sur la figure 6. Cette résistance représente l'efficacité des transferts thermiques d'un milieu vers un autre. Plus cette valeur de Rth est faible plus les transferts de chaleur s'opère efficacement. Sur la figure 6, de A à C la résistante thermique Rth va croissante.

On constate que la température atteinte sans dissipateur de chaleur peut être au-delà de 200°C ce qui a comme conséquence par exemple la dégradation de l'isolant du bobinage. En ajoutant des dissipateurs de chaleurs et en prenant en considération une résistance thermique optimisée entre le dissipateur de chaleur et le support la température maximale atteinte sur le composant sensible reste en-dessous de sa température limite.

De manière complémentaire, en plus de loger le dissipateur de chaleur que représente le matériau à changement de phase, à l'intérieur du bobinage barre, on peut disposer des dissipateurs de chaleur à d'autres endroits de la machine électrique comme décrit dans le document FR 3 012 698 au nom de la Demanderesse.

On a décrit ici une machine électrique avec un bobinage statorique. Bien entendu, l'invention s'applique aussi à une machine électrique avec un bobinage rotorique, que constitue par exemple la machine électrique dite synchrone à rotor bobinés (i.e. dans ce cas les aimants permanents sont remplacés avantageusement par un électroaimant pour générer le flux magnétique).

L'invention concerne également une machine à courant continu ou à courant alternatif tel qu'un générateur-démarreur, un alternateur, une pompe comprenant une machine électrique telle que décrite ci-dessus.

Et l'invention concerne également un moteur d'un aéronef, tel qu'un hélicoptère, comprenant une machine électrique selon l'invention.

## Revendications

1. Machine électrique comprenant un stator (1) et un rotor (2) configurés pour être entrainés en rotation l'un par rapport à l'autre, le rotor (2) comprenant une pluralité d'aimants permanents (5), le stator comprenant en outre un circuit magnétique (3) comprenant des pôles (7) s'étendant vers le rotor (2), la machine comprenant des bobinages (4, 50, 50') d'éléments conducteurs autour de chaque pôle (7) et au moins un dissipateur (8, 8', 8") de chaleur disposé à l'intérieur d'un élément conducteur, le dissipateur de chaleur comprenant un matériau (82) à changement de phase, **caractérisé en ce que** le matériau à changement de phase dudit dissipateur de chaleur est contenu dans une enveloppe (81) métallique étanche.

2. Machine électrique selon la revendication 1, dans laquelle le bobinage est un ensemble de fil cylindrique creux.

3. Machine électrique selon la revendication 1, dans laquelle le bobinage est un bobinage barre creux.

4. Machine électrique selon la revendication 3, dans laquelle le bobinage est monobloc et de préférence obtenu selon un procédé de fabrication additive.

5. Machine électrique selon l'une des revendications 1 à 4, le matériau à changement de phase étant capable de changer d'état physique entre l'état solide et l'état liquide dans une plage de température donnée.

6. Machine électrique selon l'une des revendications 1 à 5, dans laquelle le matériau (82) à changement de phase est sous forme de sels ou sous forme de composés organiques ou eutectiques ayant des températures de changement de phase solide-liquide, adaptés en fonction des contraintes d'utilisation de la machine électrique, supérieures à une centaine de degré Celsius, typiquement entre 100 °C et 300°C.

7. Machine électrique selon l'une des revendications 1 à 7, dans laquelle le dissipateur de chaleur comprend, outre le matériau (82) à changement de phase, au moins un élément qui est conducteur électrique de manière à ne pas perturber la circulation des lignes de champ magnétiques dans ladite machine.

8. Machine électrique selon l'une des revendications 1 à 7, dans l'enveloppe est conducteur électrique ou non, et conducteur thermique.

9. Machine à courant continu ou à courant alternatif tel qu'un générateur-démarreur, un alternateur, une pompe comprenant une machine électrique selon l'une des revendications 1 à 8.

10. Moteur d'un aéronef, tel qu'un hélicoptère, comprenant un démarreur-générateur selon la revendication 9.

## Patentansprüche

1. Elektrische Maschine, einen Stator (1) und einen Rotor (2) umfassend, die konfiguriert sind, um gegenseitig in Rotation versetzt zu werden, wobei der Rotor (2) eine Vielzahl von Permanentmagneten (5) umfasst, wobei der Stator ferner einen magnetischen Kreis (3) umfasst, der Pole (7) umfasst, die sich zum Rotor (2) hin erstrecken, wobei die Maschine Wicklungen (4, 50, 50') aus leitfähigen Elementen um jeden Pol (7) umfasst und mindestens einen Wärmeableiter (8, 8', 8"), der innerhalb eines leitfähigen Elements angeordnet ist, wobei der Wärmeableiter ein Phasenwechselmaterial (82) umfasst, das **dadurch gekennzeichnet ist, dass** das Phasenwechselmaterial des Wärmeableiters in einem abgedichteten Metallgehäuse (81) integriert ist.

2. Elektrische Maschine nach Anspruch 1, wobei die Wicklung eine Anordnung aus zylindrischem Hohldraht ist.

3. Elektrische Maschine nach Anspruch 1, wobei die Wicklung eine Hohlstab-Wicklung ist.

4. Elektrische Maschine nach Anspruch 3, wobei die Wicklung einstückig ist und vorzugsweise in einem additiven Fertigungsverfahren hergestellt wird.

5. Elektrische Maschine nach einem der Ansprüche 1 bis 4, wobei das Phasenwechselmaterial in der Lage ist, den Aggregatzustand zwischen dem festen und dem flüssigen Zustand in einem vorgegebenen Temperaturbereich zu ändern.

6. Elektrische Maschine nach einem der Ansprüche 1 bis 5, wobei das Phasenwechselmaterial (82) in Form von Salzen oder in Form von organischen oder eutektischen Verbindungen besteht, die Phasenwechseltemperaturen von fest zu flüssig haben, angepasst an die Einsatzbedingungen der elektrischen Maschine, die höher als hundert Grad Celsius sind, typischerweise zwischen 100 °C und 300 °C.

7. Elektrische Maschine nach einem der Ansprüche 1 bis 7, wobei der Wärmeableiter zusätzlich zum Phasenwechselmaterial (82) mindestens ein Element umfasst, das elektrisch leitfähig ist, um die Zirkulation der Linien des Magnetfelds in der Maschine nicht zu beeinträchtigen.

8. Elektrische Maschine nach einem der Ansprüche 1 bis 7, wobei das Metallgehäuse elektrisch leitfähig ist oder nicht und thermisch leitfähig.

9. Gleichstrom- oder Wechselstrommaschine wie zum Beispiel ein Startergenerator, eine Lichtmaschine, eine Pumpe, eine elektrische Maschine umfassend, nach einem der Ansprüche 1 bis 8.

10. Triebwerk eines Luftfahrzeugs wie zum Beispiel eines Hubschraubers, einen Startergenerator umfassend, nach Anspruch 9.

## Claims

1. An electric machine comprising a stator (1) and a rotor (2) configured to be driven in rotation relative to each other, the rotor (2) comprising a plurality of permanent magnets (5), the stator further comprising a magnetic circuit (3) comprising poles (7) extending towards the rotor (2), the machine comprising windings (4, 50, 50') of conductive elements around each pole (7) and at least one heat sink (8, 8', 8") disposed inside a conductive element, the heat sink comprising a phase change material (82), **characterised in that** the phase change material of said heat sink is contained in a sealed metal shell (81).

2. The electric machine according to claim 1, wherein the winding is a set of hollow cylindrical wires.

3. The electric machine according to claim 1, wherein the winding is a hollow bar winding.

4. The electric machine according to claim 3, wherein the winding is formed in one piece and preferably obtained according to an additive manufacturing method.

5. The electric machine according to any of claims 1 to 4, the phase change material being capable of changing physical state between the solid state and the liquid state in a given temperature range.

6. The electric machine according to any of claims 1 to 5, wherein the phase change material (82) is in the form of salts or in the form of organic or eutectic compounds having solid-liquid phase change temperatures, adapted according to the constraints of use of the electric machine, greater than about a hundred degrees Celsius, typically between 100°C and 300°C.

7. The electric machine according to any of claims 1 to 7, wherein the heat sink comprises, in addition to the phase change material (82), at least one element which is electrically conductive so as not to disturb the circulation of the magnetic field lines in said machine.

8. The electric machine according to any of claims 1 to 7, wherein the shell is electrically conductive or not, and thermally conductive.

9. A direct current or alternating current machine such as a starter-generator, an alternator, a pump comprising an electric machine according to any of claims 1 to 8.

10. An aircraft engine, such as a helicopter, comprising a starter-generator according to claim 9.
